# EUROPÄISCHE PATENTSCHRIFT

(11) **EP 0 852 130 B1**
(45) Veröffentlichungstag und Bekanntmachung des Hinweises auf die Patenterteilung: **21.06.2006**
(21) Anmeldenummer: 98100020.1
(22) Anmeldetag: 02.01.1998
(51) Int. Cl.: A61C 17/06, A61C 19/00

(54) **Abflusssysteme für fließfähige Exkremente eines medizinischen oder dentalmedizinischen Behandlungsplatzes**
Drainage system of fluid waste of a medical or dental treatment station
Système d'évacuation de déchets fluides d'un poste de traitement médical ou dentaire

(30) Priorität: 03.01.1997 DE 19700120
(43) Veröffentlichungstag der Anmeldung: 08.07.1998
(73) Patentinhaber: Kaltenbach & Voigt GmbH, 88400 Biberach / Riss (DE)
(72) Erfinder: Grimm, Michael, 89597 Munderkingen (DE); Baur, Helmut, 88454 Unteressendorf (DE); Braetsch, Hartmut, 88433 Assmannshardt (DE); Baumann, Linus, 88416 Bellamont (DE); von Bank, Reinhold, 88433 Schemmerhofen (DE); Wiest, Gebhard, 88454 Hochdorf (DE)
(74) Vertreter: Schmidt-Evers, Jürgen

(56) Entgegenhaltungen:
- DE-A- 4 205 936
- US-A- 3 988 134
- US-A- 4 580 978
- US-A- 4 663 035
- US-A- 5 044 953

## Beschreibung

Die Abführung von fließfähigen Exkrementen eines medizinischen oder dentalmedizinischen Behandlungsplatzes in einem Abflußsystem ist aus mehreren Gründen problematisch. An dentalen Behandlungsplätzen fallen im Bereich des Abflußsystems erhebliche Schmutzmengen an, die sowohl organische Verschmutzungen als auch andere wie metallische Verschmutzungen enthalten, wobei die Verschmutzungen in vielen Fällen nicht nur umweltschädlich sind (Amalgan) sondern auch unterschiedliche Wichten aufweisen und verhältnismäßig schwer sind, wie es bei für die dentale Versorgung benutzten Metallen der Fall ist.

Verschmutzungen mit einem großen spezifischen Gewicht neigen insbesondere in horizontal oder mit geringer Neigung verlegten Leitungen zum Absetzen auf dem Leitungsboden, wo sie die fließende Abförderung der Exkremente behindern. Vor allem die organischen Verschmutzungen, wie Blut, Speichel, Gewebereste und dergleichen sind Nährboden für Mikroorganismen, die im Abflußsystem Bewüchse und Verkrustungen bilden , welche zu Funktionsstörungen in den Rohren und/oder Schläuchen des Abflußsystems sowie Defekten an Ventilen, einem Separator und einem Amalgamabscheider des Abflußsystems führen können. Weitere Nachteile sind die Geruchsbelästigung und Infektionsgefahr für das Praxispersonal, das die nötigen Wartungsarbeiten auszuführen hat.Wird bezüglich den Vorgenannten Bewüchsen und Verkrustungen nicht entgegengewirkt, dann kommt es nach bestimmten Zeitabständen zu einem Ausfall des Abflußsystems und des zugehörigen Behandlungsplatzes wegen Verstopfung.

Eine andere Schwierigkeit besteht darin, daß die Verschmutzungen insbesondere in flach verlegten Leitungsabschnitten zur Sedimentation insbesondere von in den Exkrementen enthaltenen Schwerstoffen neigen, die zu Ablagerungen an den Wänden der Abflußleitung und zugehöriger Teile führen. Ablagerungen ergeben eine rauhe Wandung und neigen bei vorbeschriebenen Voraussetzungen ebenfalls zu Bewüchsen und Verkrustungen, die eine fließende Abführung der Exkremente behindern oder sogar aufgrund einer Verstopfung unmöglich machen können.

Aus der DE 42 05 936 A1 ist eine Einrichtung zum Abscheiden feiner Feststoffpartikel aus dem in einer Zahnarztpraxis anfallenden Abwasser bekannt, mit einer zentralen Abscheideeinheit, die über eine Sammelleitung und von dieser ausgehenden Verbindungsleitungen mit mindestens einem Arbeitsplatz verbindbar ist und das über die Sammelleitung angesaugte Gemisch aus Wasser, Feststoffpartikel und Luft in seine Bestandteile zerlegt. Jeder Arbeitsplatz weist ein Speibecken auf, von dem sich die zugehörige Verbindungsleitung erstreckt, durch die das Abwasser vom Speibecken abfließen kann. Stromab des Speibeckens sind in der Verbindungsleitung ein Zwischenspeicher und in einem Abstand davon ein Siphon angeordnet. Stromauf und stromab vom Zwischenspeicher mündet jeweils eine Leitung in die Verbindungsleitung, die sich von einer Spülwasserquelle erstreckt, die von einer Frischwasserleitung gespeist wird. Zwischen der stromabseitigen Spülwasserleitung und den Siphon mündet eine Zweigleitung in die Verbindungsleitung, die sich an einem Spülluftventil erstreckt. In Betrieb der Einrichtung wird Wasser und Luft intermittierend in die Verbindungsleitung eingeführt.

Der Erfindung liegt die Aufgabe zugrunde, Maßnahmen zu finden, mit denen eine Sedimentation und/oder Bewüchse und Verkrustungen im Abflußsystem verhindert oder wenigstens reduziert werden können. Insbesondere soll ein stromlab des Sammelbehälters befindliches Absperrventil möglichst wenig mit Schmutzpartikeln belastet werden.

Die Aufgabe wird durch ein Abflußsystem, welches die Merkmale des Anspruchs 1 aufweist, gelöst. Vorteilhafte Weiterbildungen der Erfindung sind Gegenstand der Unteransprüche.

Durch die erfindungsgemäße Anordnung des Absperrventils auf hohem Niveau liegt das Ventil außerhalb des Sammelbereichs von sedimentierender Schmutzflüssigkeit. Es wird deshalb nur während des Absaugvorganges dynamisch mit Schmutzpartikeln belastet und es besteht keine Gefahr der Anlagerung durch Sedimentation. Das Ventil befindet sich somit in einer optimalen Arbeitslage.

Gemäß einer Weiterbildung der Erfindung ist ferner wenigstens eine Spülvorrichtung mit wenigstens einer Einlaßöffnung für Wasser und/oder Luft für die Abflußleitung vorgesehen, wobei eine elektrische Steuereinrichtung zum manuellen oder automatischen Steuern des Abflußsystems vorgesehen ist und wobei die Spülvorrichtung für Wasser und/oder Luft gleichzeitig mit der Saugvorrichtung für eine bestimmte Zeit einschaltbar ist. Diese Weiterbildung ist aus mehreren Gründen vorteilhaft.

Zum einen findet aufgrund der Spülung des Abflußsystems mit Wasser eine das Wachstum der Mikroorganismen verhindernde oder zumindest behindernde Wirkung statt, wodurch Bewüchse und Verkrustungsbildungen verhindert oder zumindest vermindert werden. Hierbei handelt es sich um einen Pflegevorgang, der eine längere Lebensdauer des Abflußsystems und eine bessere und leichtere Abführung der Exkremente gewährleistet. Die Vorteile gelten auch beim Vorhandensein eines Sammelbehälters und/oder eines Geruchverschlusses in den Abflußleitungen.

Zum anderen findet bei dieser Vorgehensweise aufgrund der Wasser- und/oder Luftunterstützung ein forcierter Reinigungsvorgang statt und zwar sowohl in der Abflußleitung als auch in einem gegebenenfalls vorhandenen Sammelbehälter und/oder Geruchsverschluss. Die Strömung des Spülwassers und/oder der Luft wirkt im Sinne eines Transportmittels auf die Exkremente und bereits im Abflußsystem vorhandene Ablagerungen, wobei diese nicht nur forciert transportiert werden, sondern auch Ablagerungen abgelöst und abtransportiert werden können.

Wenn dieser Reinigungs- und/oder Pflegevorgang in bestimmten oder wählbaren Zeitabständen erfolgt, und insbesondere vor längeren Stillstandszeiten, vorzugsweise vor dem Praxisende oder vor dem Wochenende erfolgt, wird eine Sedimentation wesentlich vermindert oder völlig verhindert.

Bei dieser Wasser- und/oder Luftspülung können am Behandlungsplatz gebräuchliches Wasser, z.B. Speischalenwasser und Raumluft und/oder zusätzliches Wasser und zusätzliche Raumluft benutzt werden.

Die beschriebenen Maßnahmen eignen sich für Abflußleitungsabschnitte, die sowohl mit starkem als auch mit geringem oder keinem Gefälle verlegt sind, wie es bei einem Behandlungsplatz gegeben ist, insbesondere dann, wenn mehrere Behandlungsplätze mit einer gemeinsamen Absaugvorrichtung verbunden sind.

Im Rahmen der Erfindung ist es möglich, die erfindungsgemäßen Reinigungs- und/oder Pflegemaßnahmen nur auf Teilbereichen des Abflußsystems oder auf dessen gesamten Bereich durchzuführen. In Fällen, in denen Teilbereiche des Abflußsystems besonders gefährdet sind, kann es genügen, die erfindungsgemäßen Maßnahmen nur in diesem Teilbereich durchzuführen. Ein Trennen des oder weiterer Teilbereiche kann dabei durch Absperrventile erfolgen.

Im Rahmen der Erfindung können außerdem das Wasser und/oder die Luft kontinuierlich oder fortwährend oder nur in bestimmten Funktionsbereichen des Abflußsystems durchgeführt werden. So kann es z.B. vorteilhaft sein, die Luft oder eine zusätzliche Luftmenge nur im höheren Leistungsbereich der Saugvorrichtung zuzuführen und im niedrigen Leistungsbereich zu vermindern oder zu stoppen.

In den Unteransprüchen sind ferner Merkmale enthalten, die eine gezielte Spülung der gesamten Abflußleitung oder nur über Teilbereichen davon ermöglichen, zu einfachen und kostengünstigen Ausgestaltungen kleiner bzw. kompakter Bauweise und sicherer Funktion führen, die sich vorteilhaft an einem medizinischen oder dentalen Behandlungsplatz, insbesondere in vorhandene Bauteile desselben, integrieren lassen.

Nachfolgend werden die Erfindung und weitere durch sie erzielbare Vorteile anhand von vorteilhaften Ausgestaltungen und Zeichnungen näher erläutert. Es zeigt:
- Fig. 1: eine erfindungsgemässe Einrichtung zum Entleeren einer Speischale für einen medizinischen oderzahnmedizinischen Behandlungsplatz in einer seitlichen Schnittansicht;
- Fig. 2: bis 5 die Einrichtung in vier verschiedenen Funktionsstellungen;
- Fig. 6: eine erfindungsgemäße Einrichtung in abgewandelter Ausgestaltung;
- Fig. 7: eine erfindungsgemäße Einrichtung in weiter abgewandelter Ausgestaltung;
- Fig. 8: eine erfindungsgemäße Einrichtung in weiter abgewandelter Ausgestaltung;
- Fig. 9: eine erfindungsgemäße Einrichtung in weiter abgewandelter Ausgestaltung;
- Fig. 10: eine erfindungsgemäße Einrichtung in weiter abgewandelter Ausgestaltung;
- Fig. 11: eine Einzelheit in weiter abgewandelter Ausgestaltung;
- Fig. 12: eine mehrere erfindungsgemäße Einzel-Behandlungsplätze umfassende Behandlungsplatz-Anordnung;
- Fig. 13: bis 15 Funktionsabläufe der Einrichtung in schematischer Darstellung.

Die Hauptteile der Einrichtung 1 zum vorübergehenden Sammeln bzw. Afbühren von Exkrementen an einem Behandlungsplatz, hier einem zahnmedizinischen Behandlungsplatz, sind ein Sammelbehälter 2 und/oder ein Geruchverschluß 2.1, eine Zuführungsleitung 3, eine Abführungsleitung 4 sowie eine Waage 5 für den Sammelbehälter 2 und/oder den Geruchverschluß 2.1 und eine elektrische Steuereinrichtung S mit einer Auswerteschaltung für die Meßergebnisse der Waage 5. Die Auswerteschaltung ist in ein Steuergerät des Behandlungsplatzes integriert, was aus Vereinfachungsgründen nicht dargestellt ist. Die Abführungsleitung 4 ist mit einer Saugvorrichtung verbunden, die noch beschrieben wird.

Bei dem Sammelbehälter 2 kann es sich um einen Geruchverschluß 2.1 handeln oder der Geruchverschluß 2.1 kann auch in den Sammelbehälter 2 integriert sein, was im folgenden noch beschrieben wird. Wenn deshalb in der weiteren Beschreibung auf den Sammelbehälter 2 Bezug genommen wird, dann kann es sich immer um einen Sammelbehälter und/oder einen Geruchverschluß handeln, da jeder Geruchverschluß aufgrund seines vorzugsweise U-förmigen Leitungsverlaufs einen Sammmelbehälter bildet oder so groß ausgebildet sein kann, daß sich ein Sammelbehälter ergibt.

Der Sammelbehälter 2 ist geschützt in einem Gehäuse 6 oder Gestell angeordnet. Hierbei kann es sich um ein Gehäuse oder Gehäuseteil handeln, das speziell für den Sammelbehälter 2 vorgesehen ist, oder es kann sich auch um ein Gehäuse oder Gehäuseteil eines anderen Bauteils des Behandlungsplatzes oder z.B. eines Behandlungsstuhles handeln. Bei der vorliegenden Ausgestaltung ist das Gehäuse 6 von quaderförmiger Bauform mit einer Bodenwand 6a, aufrechten Seitenwänden 6b und einer Deckenwand 6c.

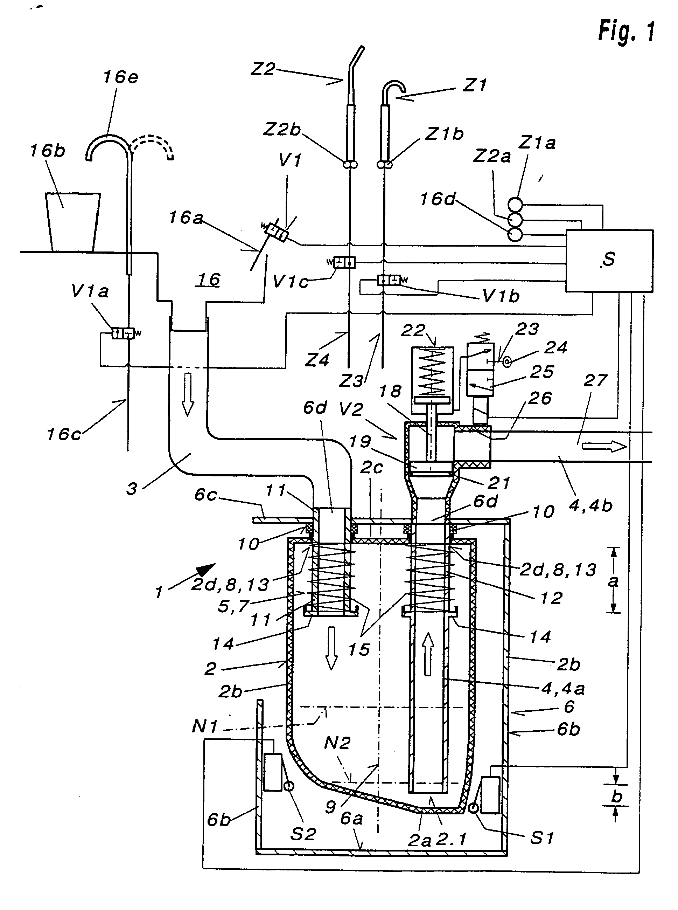

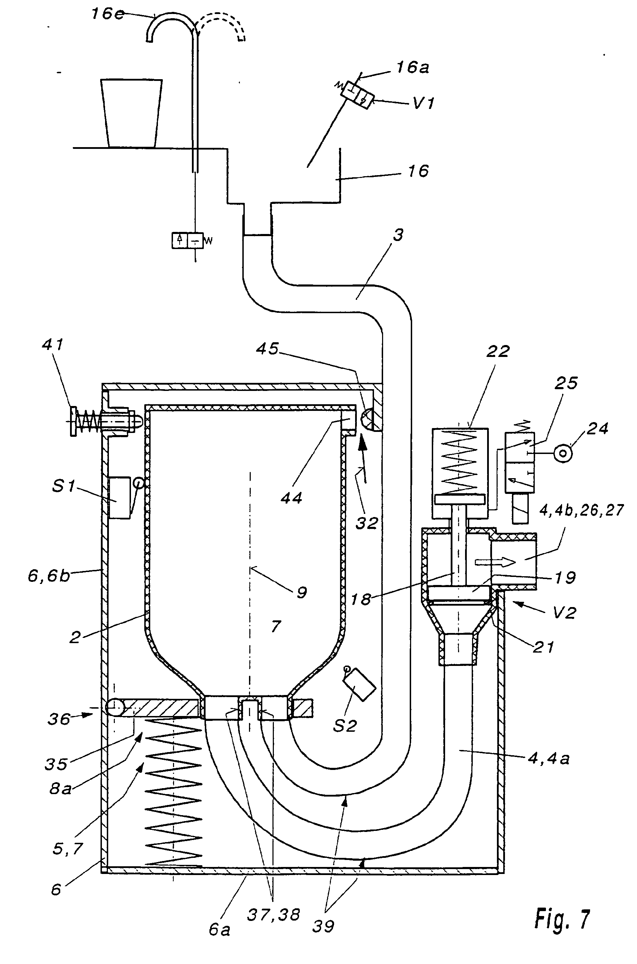

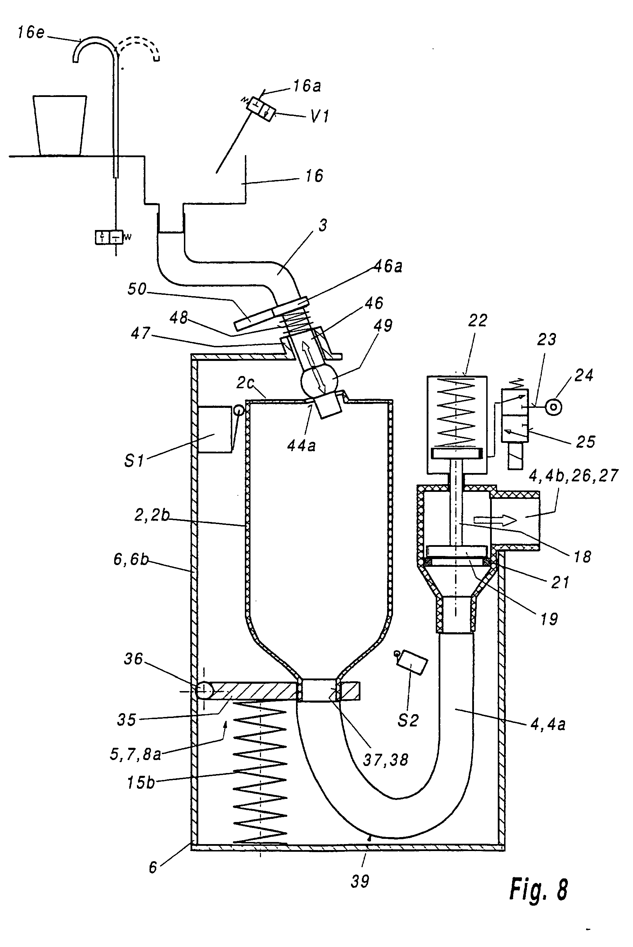

Bei den vorliegenden Ausgestaltungen weist die Waage 5 eine elastische Halterung 7 auf, die in der etwa vertikalen Richtung elastisch wirksam ist, so daß der Sammelbehälter 2 unter der Wirkung seines Eigengewichts eine im wesentlichen aufrechte Bewegung auszuführen vermag, was weiter noch erklärt wird. Die Bewegung erfolgt vorzugsweise in einer etwa vertikalen Führung 8, die bei den Ausführungsbeispielen gemäß Fig. 1 bis 6 und 9 zu entnehmen ist. Beim Ausführungsbeispiel nach den Fig. 7 und 8 ist eine Führung 8 im Sinne einer Kipplagerung 8a vorgesehen, bei der der Sammelbehälter 2 zwar ebenfalls eine aufrechte Grundbewegung ausführt, jedoch ist diese durch eine seitliche Kippbewegung überlagert.

Es ist von Vorteil, die Zu- und Abführungsleitungen 3, 4 in der Deckenwand 6c und/oder in der Bodenwand 6a anzuordnen. Hierdurch lassen sich trotz etwa vertikaler Bewegung des Sammelbehälters 2 Leitungsdurchführungen in der Deckenwand 6c oder in der Bodenwand 6a oder in der elastischen Halterung verwirklichen.

Die Raumform des Sammelbehälters 2 kann verschieden ausgeführt sein, z.B. im horizontalen Querschnitt rund oder eckig, wobei er eine Bodenwand 2a, aufrechte Seitenwände 2b und eine vorzugsweise horizontale Deckenwand 2c aufweist.

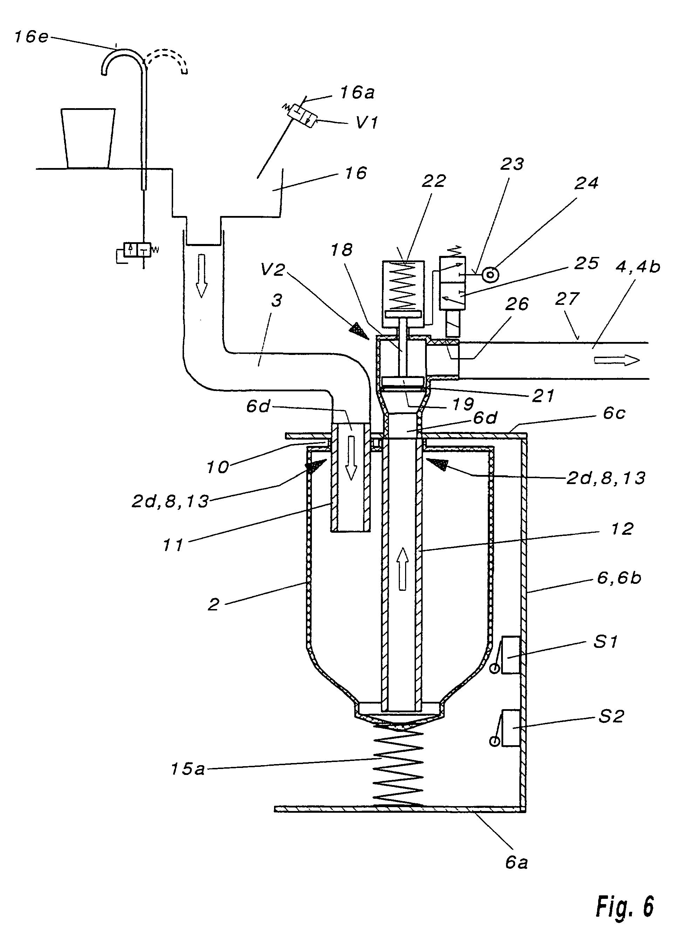

Vorzugsweise ist der Sammelbehälter 2 in dem Bereich, an der die Abführungsleitung 4 beginnt, in seiner horizontalen Querschnittsgröße verjüngt, was durch eine symmetrische oder unsymmetrische, nach unten konvergente Form der Bodenwand 2a verwirklicht sein kann. Bei einer Ausgestaltung, bei der die Zuführungs- und Abführungsleitungen 3, 4 in ein und derselben Bodenwand 2a oder Deckenwand 2c angeordnet sind, befinden sich vorzugsweise beide Leitungen 3, 4 außermittig der vertikalen Mittelachse 9 des Sammelbehälters 2, siehe z.B. Fig. 1 oder 7. Es ist jedoch auch eine mittige oder konzentrische Anordnung der Abführungsleitung 4 möglich, siehe z.B. Fig. 6, bei der die Abführungsleitung 4 konzentrisch angeordnet ist, z.B. in der Deckenwand 2a.

Die Zu- und Abführungsleitungen 3, 4 durchsetzen die Deckenwände 2c, 6c jeweils in Durchführungslöchern 2d, 6d, wobei in der Deckenwand 6c eine unbewegliche Durchführung ausgebildet ist, während in der Deckenwand 2c eine etwa vertikal bewegbare Leitungsdurchführung verwirklicht ist.

Bei der Ausgestaltung gemäß Fig. 1 sind in der Deckenwand 6c vertikale Durchführungs-Rohrstutzen 11, 12 befestigt, von denen sich der Zuführungs-Rohrstutzen 11 um ein geringeres Maß und der den Anfangsbereich der Abführungsleitung bildende Abführungs-Rohrstutzen 12 um ein größeres Maß nach unten erstreckt. Die Rohrstutzen 11, 12 durchsetzen die Deckenwand 2c des Sammelbehälters 2 in Führungslöcher 13 in der Deckenwand 2c. In vorzugsweise gleichen nach unten gerichteten Abständen von der Deckenwand 6c sind an den Rohrstutzen 11, 12 Federwiderlager 14 für zwei gleiche Federn 15 vorgesehen, vorzugsweise für die Rohrstutzen 11, 12 umgebende Druck-Wendelfedern, auf deren oberen Enden die Sammelkammer 2 mit ihrer Deckenwand 2c aufliegt. Die Anordnung kann so getroffen sein, daß die Federn 15, die Sammelkammer 2 mit einer gewissen Vorspannung gegen die Deckenwand 6c drücken. Dabei ist es vorteilhaft, die Führungslöcher 13 jeweils mit einem geeigneten Dichtungsring abzudichten. Bei der vorliegenden Ausgestaltung erfolgt dies dadurch, daß zwischen den Deckenwänden 6c und 2c jeweils ein Dichtungsring 10 oder eine Dichtungsplatte vorzugsweise aus elastisch komprimierbarem Material angeordnet und durch die Deckenwände 2c, 6c mit einer gewissen Vorspannung zusammengedrückt ist. Diese Vorspannung kann dadurch erzeugt sein, daß die Federn 15 den Sammelbehälter 2 mit seiner Deckenwand 2c gegen die Deckenwand 6c vorspannen. Die zuletzt beschriebene Abdichtung ist jedoch nur dann wirksam, wenn die Deckenwände 2c, 6c zusammengedrückt sind, was nur bei einem leeren oder teilgefüllten Sammelbehälter 2 der Fall ist. Die Dichtungsringe 10 können an der Deckenwand 2c oder der Deckenwand 6c befestigt sein.

Beim vorliegenden zahnmedizinischen Behandlungsplatz erstreckt sich die Zuführungsleitung 3 vom Ausgang einer sogenannten höher als der Sammelbehälter 2 angeordneten Speischale 16, in die Spülwasser durch eine Spülwasserleitung 16a und Mundspülwasser strömen. In der Spülwasserleitung 16a ist ein ansteuerbares Sperrventil V1 angeordnet zum Öffnen und Schließen mittels Steuersignalen der Steuereinrichtung S.

Bei einem zahnärztlichen Behandlungsplatz ist der Einrichtung 1 eine Bereitstellungsvorrichtung für Mundspülwasser vorgesehen, bestehend aus einem Becher 16b, der in an sich bekannter Weise mit Mundspülwasser befüllbar ist. Hierzu dient eine in den Becher 16b gerichtete Mundspülwasserleitung 16c, in der ein Ventil V1a zum Öffnen und Schließen der Leitung 16c angeordnet ist, das durch eine Steuerleitung mit der Steuereinrichtung S verbunden ist und so ansteuerbar ist, z.B. unter Berücksichtigung eines bestimmten Volumens, daß der Becher 16b befüllbar ist, ohne überzulaufen. Dies kann automatisch oder durch die Betätigung eines vom behandelnden Arzt und/oder einer Helferin betätigbaren Betätigungsglied 16d erfolgen, z.B. ein Schalter oder eine Drucktaste, das direkt auf das Ventil V1a wirken kann oder durch eine Signal- oder Steuerleitung mit der Steuereinrichtung S verbunden sein kann. Ein gleiches oder ähnliches Betätigungsglied kann auch zum manuellen Öffnen und Schließen des Ventils V1 vorgesehen sein. Bei dem Mundspülwasser handelt es sich vorzugsweise um Wasser oder Leitungswasser, das mit einem entsprechenden Anteil Desinfektionsmittel versehen ist. Zum Befüllen des Bechers 16b ist ein mit der Leitung 16c verbundenes Füllrohr 16e am Rand der Speischale 16 vorgesehen, mit einem vertikalen Rohrabschnitt, der oben im Sinne eines auf dem Kopf stehenden L oder J so weit seitlich gebogen oder abgewinkelt ist, daß durch ein manuelles Drehen des vertikalen Rohrabschnitts die Öffnung des Füllrohrs 16e wahlweise über dem Becher 16b oder über die Speischale 16 zu positionieren ist.

Zur Absaugung von Körperexkrementen und/oder Behandlungsflüssigkeit ist ein Sauger vorgesehen, der durch einen Schlauch mit dem Absaugsystem verbunden ist. Bei einem dentalmedizinischen Behandlungsplatz können zwei Sauger, nämlich ein sogenannter Speichelzieher Z1 und ein Spraynebelsauger Z2 vorgesehen sein, die jeweils durch einen Schlauch Z3, Z4 oder dergleichen mit dem Absaugsystem an geeigneter Stelle verbunden sind, z.B. mit der Abführungsleitung 4 hinter einem gegebenenfalls vorhandenen Sperrventil V2. Jedem dieser Sauger Z1, Z2 ist ein für seine Funktion zu öffnendes Sperrventil V1b, V1c zugeordnet, das durch die manuelle Betätigung eines Betätigungsgliedes Z1a, Z2a elektrisch zu öffnen und zu schließen ist, wobei die Saugvorrichtung gleichzeitig oder bereits beim Abheben der Sauger Z1, Z2 von einem Halter Z1b, Z2b eingeschaltet wird. Die Sauger Z1, Z2 können bei allen Ausführungsbeispielen vorgesehen sein, sind aus Vereinfachungsgründen jedoch nur in Figur 1 dargestellt.

Bei der vorliegenden Ausgestaltung ist in der Abführungsleitung 4 außerhalb des Sammelbehälters 2 und vorzugsweise auch außerhalb des Gehäuses 6 das Sperrventil V2 angeordnet, das mit einer Kolbenstange 18 die Leitungswandung durchsetzend in die Abführungsleitung 4 hineinragt und mit einem Sperrkolben 19 und einen zugehörigen Ventilsitz 21 an der Innenwandung der Leitung das eigentliche Sperrventil V2 bildet. Bei der vorliegenden Ausgestaltung ist das Sperrventil V2 koaxial zum zugehörigen Rohrstutzen 12 angeordnet. Als Antrieb für das Ventilglied kann ein Pneumatikzylinder 22 dienen, der mittels durch eine Druckluftleitung 23 von einer Druckluftquelle 24 zugeführter Druckluft betätigbar ist. Zu seiner Steuerung ist in der Druckluftleitung 23 ein Wegeventil 25, hier in Form eines Elektromagnetventils, angeordnet. Stromab des Ventilsitzes weist die Abführungsleitung 4 einen Rohrstutzen 26, hier Winkelrohrstutzen, von dem ein Weiterführungs-Leitungsabschnitt 4b zu einer Absaugvorrichtung und weiteren Behandlungsvorrichtungen für die Exkremente, z.B. ein Amalgam-Abscheider, führt. Der stromauf des Sperrventils V2 angeordnete Abschnitt der Abführungsleitung ist mit 4a bezeichnet.

Mit zunehmender Einströmung des Abwassers mit Exkrementen aus der Speischale 16 erhöht sich das Gewicht des Sammelbehälters 2, so daß er gegen die Kraft der Federn 15 absinkt. Diese Bewegungslänge ist von der Elastizitätskennlinie der Federn abhängig. Die Elastizität der Federn 15 ist so bemessen, daß ein etwa vertikaler Federweg von mehreren Zentimetern erreicht wird. Wenn der Sammelbehälter 2 sein Füllungsniveau erreicht hat, ist sein Gewicht so groß, daß er sich im unteren Endbereich des vorgegeben Federweges a befindet. Zur Einschaltung der Absaugung betätigt der Sammelbehälter 2 oder ein Anbauteil desselben einen zugeordneten elektrischen Schalter S1, dessen Schaltsignal in der elektrischen Steuereinrichtung ausgewertet und zu einem Öffnungssignal für das Sperrventil V2 und ein Einschaltsignal für die in Fig. 1 nicht dargestellte Absaugvorrichtung verarbeitet wird. Bei der vorliegenden Ausgestaltung ist der Schalter S1 im unteren Endbereich des Sammelbehälters 2 angeordnet, wobei er durch dessen unteren Endbereich direkt betätigt wird, z.B. wenn das Füllniveau N1 erreicht ist.

Bei der erfindungsgemäßen Ausgestaltung ist somit der Schmutzwasser-Sammelbehälter 2 federnd aufgehängt. Er verfügt über eine Öffnung 6d für den Schmutzwasser-Einlauf, der vorzugsweise durch einen Schlauch mit der Speischale 16 verbunden ist. Des weiteren weist der Sammelbehälter 2 eine Öffnung 6d für die Abführungsleitung 4, z.B. ein Absaugrohr, auf, die durch das Absperrventil V2 zu schließen und zu öffnen ist. Der Sammelbehälter 2 ist somit durch geeignete Federn 15 vertikal verschiebbar in seinem Bewegungsbereich gehalten. Je nach Füllgrad ändert sich die Lage des Sammelbehälters 2. Sinkt er durch die Gewichtskraft um einen bestimmten Weg ab, so wird der Schalter S1 betätigt, der die Absaugung eingeleitet. Dabei werden das Ventil V2 geöffnet und eine davon stromab angeordnete Saugmaschine gestartet. Der Behälterinhalt wird sodann abgesaugt. Dadurch wird der Sammelbehälter 2 leichter, und er wird durch die Federkraft wieder nach oben geschoben. Der Schalter S1 wird nicht mehr betätigt und dadurch das Ventil V2 geschlossen.

Die Anordnung ist so getroffen, daß ein Flüssigkeitsrest im Sammelbehälter 2 verbleibt, der auf dem Niveau N2 höher steht, als das untere Ende des Absaugrohrs 12, wodurch störende Schlürfgeräusche vermieden sind. Wenn danach der Sammelbehälter 2 wieder befüllt wird und dadurch aufgrund des wachsenden Gewichtes nach unten sinkt, findet der vorbeschriebene Vorgang erneut statt. Dieser läuft dann oszilierend ab, also den Sammelbehälter 2 befüllen, Ventil V2 auslösen, absaugen, Ventil V2 schließen, Sammelbehälter 2 befüllen usw.. Die Saugmaschine hat eine Nachlaufzeit von einigen Sekunden um bei dem oszilierenden Vorgang einen kontinuirlichen Saugmaschinenbetrieb zu gewährleisten.

Ein wesentlicher Vorteil der erfindungsgemäßen Ausgestaltung besteht darin, daß die vorhandene Sensori, nämlich die das jeweilige Niveau N1, N2 ermittelnden Schalter, hier der Schalter S1, und wenigstens ein weiterer noch zu beschreibender Schalter außerhalb des Schmutzbereichs angeordnet sind und dadurch zum einen unanfällig für Störungen sind und zum anderen im Reinraumbereich außerhalb des Sammelbehälters 2 angeordnet sind, wo sie nicht nur handhabungsfreundlich zugänglich sind, sondern auch einfacher ein- und ausgebaut werden können. Das erfindungsgemäße System arbeitet deshalb sehr zuverlässig.

Durch die Anordnung des Absperrventils V2 auf hohem Niveau, hier außerhalb des Sammelbehälters 2 und insbesondere über letzterem und am stromaufseitigen Endabschnitt eines mit geringem Gefälle verlegten Abführungsleitungsabschnitts, liegt das Ventil V2 außerhalb des Sammelbereichs von sedimentierender Schmutzflüssigkeit. Es wird deshalb nur während des Absaugvorganges dynamisch mit Schmutzpartikeln belastet. Es besteht keine Gefahr der Anlagerung durch Sedimentation. Das Ventil V2 befindet sich somit in einer optimalen Arbeitslage.

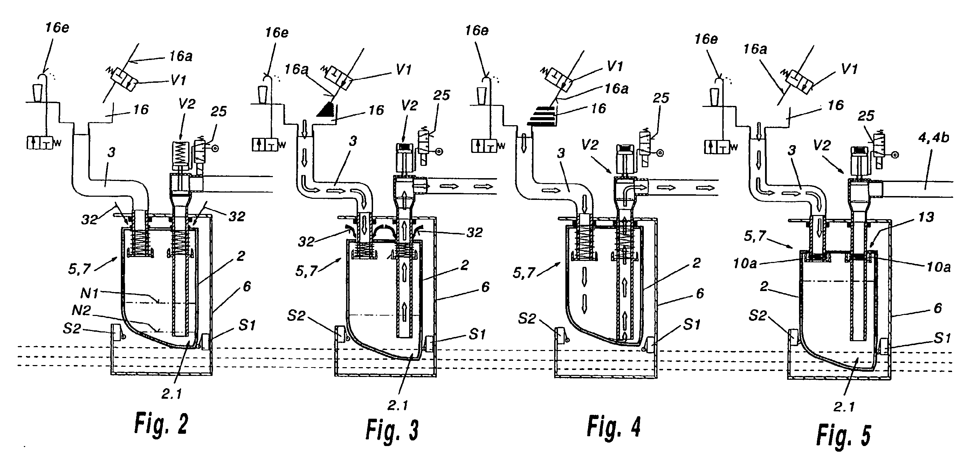

Im folgenden werden ein Befüllungs- und Entleerungszyklus des Sammelbehälters 2 und weitere Abführungszyklen anhand der Fig. 2 bis 5 beschrieben. Die Anordnung in Fig. 2 entspricht einer Bereitschaftsstellung der Einrichtung 1, z.B. unmittelbar nach einem Absaugungsvorgang, nach dem sich der Sammelbehälter 2 in seiner oberen Stellung und ein Mindestniveau N2 im Sammelbehälter 2 befindet, dessen Höhe größer ist, als der Abstand b zwischen dem Rohrstutzen 12 und dem Behälterboden 2a. Hierdurch ist der Geruchsverschluß 2.1 gebildet. Ein solcher zeitweise oder kontinuierlich wirksamer Geruchverschluß kann auch am Einlauf- Rohrstutzen 11 gebildet sein, wenn dieses sich bis unter das Niveau N1 (in Figur 3 angedeutet) oder bis unter das Niveau N2 erstreckt. Bei einer solchen Anordnung werden außerdem Geräusche beim Einlaufen der Exkremente bzw. des Wassers in den Sammelbehälter 2 vermieden.

Gemäß Fig. 3 ist das Füllniveau im Sammelbehälter 2 erreicht, so daß der Schalter S1 betätigt wird und gleichzeitig oder nacheinander das Sperrventil V2 geöffnet und die Absaugvorrichtung eingeschaltet werden. Dabei wird der Sammelbehälter 2 abgesaugt und entleert. Aufgrund der dabei stattfindenden Gewichtsverminderung wird der Sammelbehälter 2 durch die Federkraft der Feder 15 nach oben geschoben. Der Schalter S1 wird dann nicht mehr betätigt, wodurch die Absaugvorrichtung abgeschaltet und das Sperrventil V2 automatisch geschlossen werden. Die Absaug- oder Entleerungsmenge kann durch einen Zeitschalter oder dergleichen so vorbestimmt werden, daß die Absaugvorrichtung nach ihrer Einschaltung eine vorbestimmte Zeit nachläuft und dann selbsttätig abgeschaltet wird, wodurch eine bestimmte Füllmenge entleert wird. Die Kraft der Federn 15 und die Absaugung sind unter Berücksichtigung des Füllvolumens so bemessen, daß nach dem Abschalten der Absaugung im Sammelbehälter 2 das den unteren Rand des Rohrstutzen 12 etwas übersteigende Mindestniveau N2 des Abwassers verbleibt. Hierdurch werden störende Schlürfgeräusche vermieden.

Fig. 4 zeigt einen besonderen Verfahrensschritt, nämlich ein Absaugen des Sammelbehälters 2 zum Zweck seiner Reinigung, wobei er weitgehend oder völlig entleert wird und wobei die Absaugung mit einer größeren Leistung und/oder stoßweise erfolgen kann, um den Reinigungseffekt zu vergrößern und ein Reinigungs- oder Freisaugen der Zu- und Abführungsleitung 3, 4 zu erreichen. Dieser Vorgang kann automatisch oder manuell eingeschaltet und durchgeführt werden, wobei der Schalter S1 überbrückt wird oder eine besondere Schaltung benutzt wird. Bei diesem Reinigungsvorgang wird der Sammelbehälter 2 vorzugsweise völlig leer gesaugt. Aufgrund der dabei stattfindenden Gewichtsverminderung und durch den vorhandenen Unterdurck wird der Sammelbehälter 2 weiter nach oben verschoben, wobei er gegen die Dichtung drückt. Dabei wird gegebenenfalls unter Komprimierung der Dichtung die Abdichtung herbeigeführt und das Einströmen von Nebenluft, siehe Pfeile 32 in Fig. 2 und 3, verhindert. Diese Abdichtung führt zu einer Forcierung des Unterdrucks und einer Forcierung der Reinigungswirkung, ohne daß die Absaugleistung unbedingt erhöht werden müßte. Die Ventile V1b, V1c können dabei geschlossen sein. Die Abschaltung dieses Vorgangs Reinigungssaugen kann ebenfalls durch einen Zeitschalter oder einen bestimmten Programmverlauf automatisch oder manuell erfolgen. Während dieses Reinigungssaugens ist es vorteilhaft, Spülwasser in die Zuführungsleitung 3 einzulassen, was durch kontinuierliche oder stoßweise Abgabe von Spülwasser durch die Spülwasserleitung 16a in die Speischale 16 erfolgen kann, wie es Fig. 4 andeutungsweise zeigt. Auch diese Steuerung kann manuell oder automatisch eingeschaltet werden. In gleicher Weise ist es auch möglich, anstelle des Speischalen-Spülwassers Mundspülwasser oder zusätzlich Mundspülwasser aus dem Füllrohr 16e in die Speischale 16 strömen zu lassen, wozu das Ventil V1a entsprechend zu steuern ist.

Es ist im Rahmen der Erfindung auch möglich und vorteilhaft, das Reinigungssaugen zu automatisieren und in ein vorhandenes Steuerungsprogramm mit Reinigungsprogramm zu integrieren. Ein solcher Reinigungsvorgang kann in bestimmten Zeitabständen z.B. täglich oder wöchentlich oder vor längeren Stillstandszeiten, z.B. am Praxisende oder vor dem Wochenende, manuell oder automatisch erfolgen.

Aus Fig. 5 ist eine Sicherheitsvorrichtung zu entnehmen, die dann in Funktion tritt, wenn durch eine Störung, z.B. ein Defekt des Schalters S1 keine Entleerung erfolgt. In einem solchen Fall sinkt der Sammelbehälter 2 aufgrund seines vergrößerten Gewichtes über die Schaltstellung für den Schalter S1 hinaus nach unten. Dabei wird durch einen Sensor, z.B. einen zweiten Schalter S2, der Zulauf, hier die Wasser abgebenden Leitungen 16a, 16c, zur Speischale 16 gestoppt und die Absaugvorrichtung eingeschaltet. Durch die vorbeschriebene Anordnung oder Verfahrensweise läßt sich somit eine Verunreinigung im Gehäuse 6 und/oder ein Überlauf zur Speischale 16 (Wasserschäden) vermeiden.

In dieser unteren Überfüllstellung des Sammelbehälters 2 liegt seine Deckenwand 2c auf den Federn 15 bzw. auf den Federwiderlagern 14 auf. Um am Einlauf und Auslauf des Sammmelbehälters 2 einen Wasserauslauf und somit Wasserschäden zu vermeiden, ist es vorteilhaft, auch an der Unterseite der Deckenwand 2c oder an den Federwiderlagern 14 Dichtungen 10a (Fig.5) oder eine Dichtungsplatte anzuordnen, die in der untersten Stellung des Sammelbehälters 2 eine Abdichtung der Durchführungslöcher 13 gewährleisten. Die Abdichtung verhindert einen Austritt von Flüssigkeit bei völlig gefülltem Sammelbehälter 2, z.B. auch dann, wenn der Schalter S2 ausfallen sollte. Das Wasser bzw. die Exkremente im Sammelbehälter 2 können somit bis in den Innenbereich des tiefer als die Speischale 16 angeordneten Sperrventils V2 bzw. bis zum Abführungleitungsabschnitt 27 steigen und durch das Absperrventil V2 abfließen, ohne daß es zu einem Wasseraustritt im Bereich des Sammelbehälters 2 oder im Bereich der Speischale 16 kommt. Es ist im Rahmen der Erfindung folglich möglich, einen solchen Spülvorgang ohne Saugwirkung der Saugvorrichtung manuell oder automatisch (programmgesteuert) in die Arbeitsweise einzubeziehen.

Im Rahmen der Erfindung ist es auch möglich, die Zuführungs- und/oder Abführungsleitungen 3, 4 in die etwa aufrechte Bewegung des Sammelbehälters 2 einzubeziehen. Dies ist z.B. dann möglich, wenn in den Zwischenbereichen zwischen dem Sammelbehälter 2 und der Speischale 16 einerseits und der Absaugvorrichtung andererseits flexible Schläuche angeordnet sind.

Bei der Ausgestaltung gemäß Fig. 6, bei der gleiche oder vergleichbare Teile mit gleichen Bezugszeichen versehen sind, ist zum einen der Rohrstutzen 12 der Abführungsleitung 4 konzentrisch angeordnet, wobei der vorzugsweise im Querschnitt runde oder viereckige Sammelbehälter 2 im Bereich seiner Bodenwand 2a eine verjüngte konzentrische Vertiefung aufweist, in die sich der Rohrstutzen 12 konzentrisch bei Wahrung eines Abstands von der Bodenwand 2a in der oberen Stellung erstreckt. Außerdem ist eine gemeinsame Feder 15a zur nachgiebigen Abstützung des Sammelbehälters 2 vorgesehen, die sich unter letzterem in vorzugsweise konzentrischer Position befindet und gegen die Bodenwand 2a drückt und sich dabei an einem geeigneten Widerlager, z.B. an der Bodenwand 6a des Gehäuses 6 abstützt. Im übrigen kann diese Ausgestaltung entsprechend dem vorbeschriebenen Beispiel ausgebildet sein und funktionieren.

Das Ausführungsbeispiel gemäß Fig. 7, bei dem gleiche oder vergleichbare Teile ebenfalls mit gleichen Bezugszeichen versehen sind, unterscheidet sich von den vorbeschriebenen Ausgestaltungen in mehrerer Hinsicht.

Zum einen ist anstelle einer etwa vertikalen Bewegungsführung die vorerwähnte Kipplagerung 8a vorgesehen, bei der der Sammelbehälter 2 bei zunehmenden Gewicht eine vertikale und zugleich eine seitliche Kippbewegung ausführt. Der Sammelbehälter 2 ist auf einem etwa horizontalen Hebelarm 35 gelagert, der in einem Endbereich um eine horizontale und seitliche Schwenkachse schwenkbar in einem Gelenk 36 am Gehäuse 6 gelagert und durch eine Feder, insbesondere Druckfeder 15b, nach oben vorgespannt ist.

Zum anderen sind bei dieser Ausgestaltung die Zuführungs- und Abführungsleitungen 3, 4 nicht an der Oberseite sondern an der Unterseite des Sammelbehälters 2 angeschlossen. Bei der vorliegenden Ausgestaltung durchsetzen die Zu- und Abführungsleitungen 3, 4 den Hebelarm 35 in vertikalen Löchern 37, die auch zur Aufnahme von unterseitigen Rohrstutzen 38 dienen können, an denen die Zu- und Abführungsleitungen 3, 4 angeschlossen sein können. Letztere sind in dem betreffenden Bereich vorzugsweise durch flexible Schläuche gebildet. Bei dieser Ausgestaltung läßt sich in einfacher Weise ein Geruchverschluß in der Zuführungsleitung 3 verwirklichen, nämlich dadurch, daß die Zuführungsleitung 3 aufgrund einer U-förmigen Biegung eine Rohrkrümmung bildet, in der aufgrund einer selbsttätigen Wasseransammlung der Geruchverschluß 39 selbsttätig gebildet wird. Ein solcher Geruchverschluß 39 ist auch in der Abführungsleitung 4 zusätzlich zum Sperrventil V2 vorhanden, das bei der vorliegenden Ausgestaltung nicht oberhalb der Deckenwand 6c sondern seitlich an einer zugehörigen Seitenwand 6b angeordnet ist, wobei eine Gehäuseöffnung für den Durchgang der Zu- und Abführungsleitungen 3, 4 vorgesehen ist. Ein Geruchverschluß 39 in der Zuführungsleitung kann auch bei den übrigen Ausführungsbeispielen vorgesehen sein.

Bei der vorliegenden Ausgestaltung wird bei einer entsprechenden Gewichtszunahme des Sammelbehälters 2 der im seitlichen und vorzugsweise oberen Bereich des Sammelbehälters 2 angeordnete Schalter S1 bei einer seitlichen Kippbewegung des Sammelbehälters 2 freigegeben und dadurch geschaltet. Es ist vorteilhaft, den Schalter S1 im oberen Bereich des Sammelbehälters 2 anzuordnen, wodurch größere Bewegungen des Sammelbehälters vorgegeben sind.

Ein weiterer Unterschied besteht darin, daß bei der Ausgestaltung gemäß Fig. 7 die Entleerung des Sammelbehälters 2 auch manuell eingeleitet werden kann. Hierzu ist in einer Seitenwand 6b des Gehäuses 6 ein horizontaler Stößel 41 in Form eines Stiftes horizontal verschiebbar in einem Führungsloch in der Seitenwand 6b gelagert und vorzugsweise durch eine Druckfeder 42 in seine äußerer Endstellung vorgespannt. Bei der vorliegenden Ausgestaltung ist die Druckfeder 42 zwischen der Seitenwand 6b und einem Betätigungskopf des Stößels 41 angeordnet. Durch ein manuelles Einschieben des Stößels 41 wird der Sammelbehälter 2 - wie bei seiner Gewichtsvergrößerung - gekippt, wodurch der Schalter S1 geschaltet wird und der Entleerungsvorgang eingeleitet wird.

Diese Ausgestaltung ermöglicht auch eine manuelle Einstellung der Absaugvorrichtung auf den besonderen Reinigungsvorgang Reinigungssaugen. Hierzu ist in der dem Stößel 41 gegenüberliegenden Seitenwand ein Belüftungsloch 44 angeordnet, durch das im normalen Absaugbetrieb Nebenluft 32 einströmt. Wenn dagegen der Sammelbehälter 2 durch eine manuelle Druckbetätigung des Stößels 41 mit dem Rand des Belüftungsloches 44 gegen einen dem Belüftungsloch 44 in einem entsprechenden Kippabstand vorgeordneten Verschlußstopfen 45 gedrückt wird, wird das Belüftungsloch 44 verschlossen, so daß keine Nebenluft 32 einströmen kann. Hierdurch werden der Unterdruck und die Strömungsgeschwindigkeit in den Leitungen und dem Sammelbehälter 2 erhöht und somit ein Vorgang Reinigungssaugen eingeschaltet, der mit dem vorbeschriebenen Vorgang vergleichbar ist. Durch wiederholtes Drücken und wieder Loslassen des Stößels 41 kann auch eine vorbeschriebene stoßweise Wirkung der Reinigungsabsaugung erreicht werden, in dem die Nebenluft 32 abwechselnd eingelassen wird und wieder gesperrt wird. Bei der vorliegenden Ausgestaltung ist der Verschlußstopfen 45 an der dem Stößel 41 gegenüberliegenden Seitenwand 6b angeordnet und befestigt.

Bei der Ausgestaltung gemäß Fig. 8, bei der gleiche oder vergleichbare Teile mit gleichen Bezugszeichen versehen sind, ist die Zuführungsleitung 3 an der Oberseite und die Abführungsleitung 4 an der Unterseite des Sammelbehälters 2 angeschlossen. Dabei kann auch hier eine die Waage 5 bildende Kipplagerung 8a im vorbeschriebenen Sinne vorgesehen sein.

Für den oberseitigen Anschluß ist zwischen der Zuführungsleitung 3 und der Deckenwand 2c ein Stößel oder Schieberohr 46 in der Kipprichtung etwa entsprechender schräger Anordnung vorgesehen, das in einer Lochführung 47 in der Deckenwand 6c des Gehäuses 6 verschiebbar gelagert und durch eine gegen einen Flansch 46a drückende Feder 48 nach oben in eine Stellung vorgespannt ist, in der eine am unteren Ende oder in einem Abstand von diesem Ende angeordnete kugelabschnittförmige Verdickung 49 einen Abstand von einem Loch 44a in der Deckenwand 6c aufweist, das im herunter geschobenen Zustand des Schieberohrs 46 das Loch 44a verschließt. Als manuelles Angriffselement kann ein z.B. am Flansch 46a befestigtes Druckstück 50 dienen.

Dieses Schieberohr 46, das den unteren Endabschnitt der Zuführungsleitung 3 bilden kann, erfüllt einen mit dem Stößel 41 vergleichbaren Zweck.

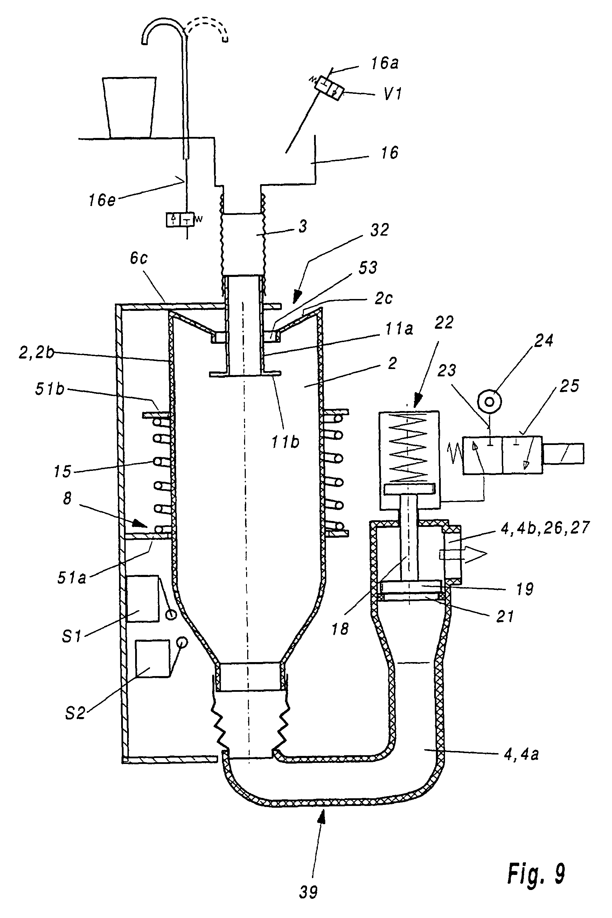

Bei der Ausgestaltung nach Fig. 9, bei der gleiche oder vergleichbare Teile mit gleichen Bezugszeichen versehen sind, ist die etwa vertikale Führung 8 durch einen am Gehäuse 6 befestigten und den Sammelbehälter 2 umgebenden Führungsring 51a gebildet. Die Feder 15 umgibt den Sammelbehälter 2 ebenfalls, ist mit ihrem unterem Ende auf dem Führungsring 51a abgestützt und mit ihrem oberen Ende gegen eine Schulterfläche oder einen Stützring 51b am Umfang des Sammelbehälters 2 wirksam. Das untere Ende der Zuführungsleitung 3 ist durch einen die Deckungswände 2c, 6c durchfassenden und in der Deckenwand 6c befestigten Rohrstutzen 11a mit einem Flansch 11b an einem unteren Ende gebildet, der den Rand der Öffnung 53 in der Deckenwand 2c mit einem nach unten gerichteten Abstand untergreift, wenn der Sammelbehälter 2 sich in einer oberen Stellung befindet. In dieser Stellung kann somit im Absaugbetrieb Nebenluft 32 durch die Öffnung 53 in der Deckenwand 2c eintreten. Die Öffnung 53 schließt selbsttätig im Funktionsbetrieb Reinigungssaugen.

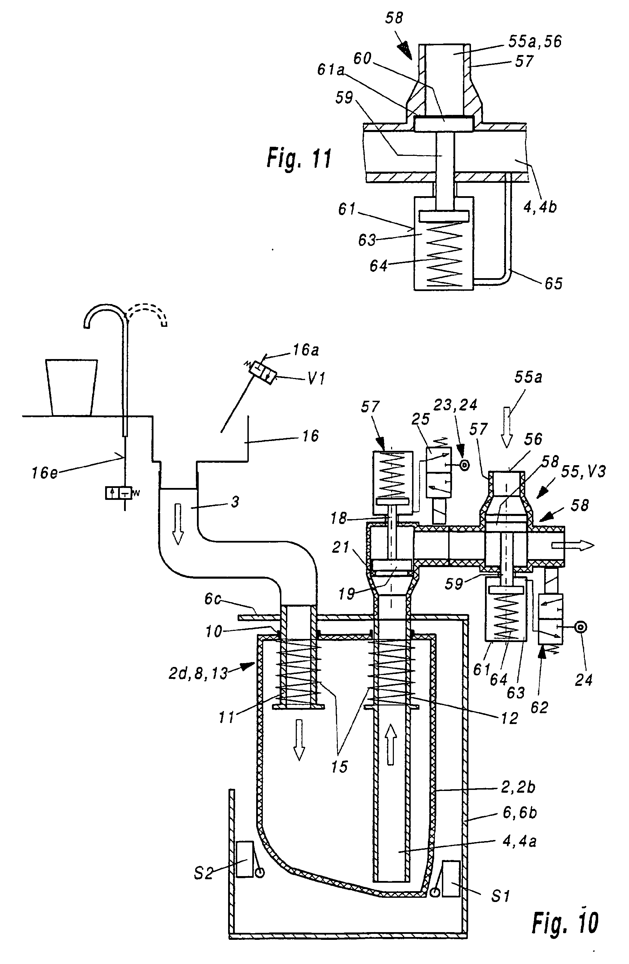

Bei der Ausgestaltung gemäß Fig. 10, bei der gleiche oder vergleichbare Teile mit gleichen Bezugszeichen versehen sind, ist der Einrichtung 1 zum vorübergehenden Sammeln von Exkrementen an einem Behandlungsplatz eine Zuführungsvorrichtung 55 für Transportluft 55a zugeordnet, die eine Einführung der Transportluft in die Abführungsleitung 4 wahlweise für einen bestimmten Reinigungsvorgang für die Abführungsleitung 4 oder fortlaufend gestattet. Hierdurch läßt sich aus folgenden Gründen eine Beeinträchtigung der Abführung der Exkremente in der Abführungsleitung 4 oder deren Verstopfung verhindern und - sofern eine Beeinträchtigung oder Verstopfung bereits vorhanden ist - gezielt beseitigen.

Die vorbeschriebene Beeinträchtigung der Exkrementenabführung in der Abführungsleitung 4 ergibt sich insbesondere in einer flach verlegten Abführungsleitung 4, die sich gegebenenfalls über mehrere Meter erstrecken kann. Insbesondere in diesem Abführungsbereich neigen die Exkremente dazu, sich im sie transportierenden Wasser abzusetzen. Dabei findet eine Sedimentation der Schwerteile des zu fördernden Mediums statt. Das bedeutet konkret, daß sich Schwerteile, wie Metall-und Amalagamverschliff ablagern und mit der Leitungswandung verkrusten. Hierdurch wird die Leitungswandung rauh, was zu einer Beeinträchtigung der Abführung beiträgt. Die vorbeschriebenen Ablagerungsvorgänge treten insbesondere bei längeren Stillstandszeiten statt, wie über Nacht oder am Wochenende.

Das vorbeschriebene Sedimentationsproblem läßt sich durch die Zuführungsvorrichtung 55 für Transportluft verhindern. Die Zuführungsvorrichtung 55 umfaßt eine Einlaßöffnung 56 für Transportluft in der Abführungsleitung 4, vorzugsweise vor dem Bereich oder im Anfangsbereich von horizontalen Abschnitten der Abführungsleitung 4, in denen die vorgenannten Sedimentationsschwierigkeiten besonders auftreten. Eine vorteilhafte Position für die Zuführungsvorrichtung 55 ist der Bereich direkt hinter dem Sammelbehälter 2 oder, sofern ein Sperrventil V2 vorhanden ist, direkt dahinter, wie es Fig. 10 zeigt. Bei dieser Ausgestaltung ist der Einlaßöffnung 56, die sich im oberen bzw. Firstbereich der Abführungsleitung 4 befindet und durch einen von der Abführungsleitung 4 nach oben ragenden Rohrstutzen 57 oder eine Transportluft-Zuführungsleitung gebildet sein kann, ein Sperrventil 58 zugeordnet, das manuell oder automatisch und programmgesteuert wahlweise zu schließen und zu öffnen ist. Bei der vorliegenden Ausgestaltung ist das Sperrventil V3 von einer mit dem Sperrventil V2 vergleichbaren Bauweise und es weist einen Verschlußkörper 60 an einer Kolbenstange 59 eines Kolbenzylinders 61 auf, der durch ein Wegeventil 62 zum Schließen und Öffnen des Ventils V3 ansteuerbar ist. Der Kolbenzylinder 61 kann unter der Abführungsleitung 4 angeordnet sein, wobei die Kolbenstange 59 die Wandung der Abführungsleitung 4 von unten abgedichtet durchsetzt. Der Ventilsitz ist mit 61a bezeichnet.

Bei dieser Ausgestaltung kann die Zuführungsvorrichtung 55 wahlweise eingeschaltet werden, z.B. speziell für einen Reinigungsvorgang der Abführungsleitung 4, zu dem das Sperrventil V3 geöffnet und eine stromab in der Abführungsleitung 4 angeordnete Absaugvorrichtung eingeschaltet werden.

Zur elektrischen Steuerung der vorbeschriebenen Steuerelemente ist eine damit durch Signalverbindungen in Verbindung stehende Steuervorrichtung 5 (Fig. 1) vorgesehen.

Das Ausführungsbeispiel nach Fig. 11, bei dem ebenfalls gleiche oder vergleichbare Teile mit gleichen Bezugszeichen versehen sind, unterscheidet sich vom vorbeschriebenen Ausführungsbeispiel dadurch, daß das Sperrventil V3 in Abhängigkeit von dem Unterdruck in der Abführungsleitung 4 selbsttätig gesteuert wird, der stromab des Sperrventils V3 in der Abführungsleitung 4 herrscht. Eine solche Steuerung kann dadurch verwirklicht sein, daß der Zylinderraum 63, in dem sich die als Druckfeder ausgebildete Schließfeder 64 befindet, durch eine Verbindungsleitung 61b mit dem stromab gelegenen Abschnitt der Abführungsleitung 4 verbunden ist. Die Federkraft ist so bemessen, daß mit zunehmenden Unterdruck oder bei eingeschalteter Absaugvorrichtung der sich einstellende Unterdruck das Sperrventil V3 öffnet. Beide vorbeschriebenen Ausgestaltungen ermöglichen es, die Abführungsleitung 4 nach einem normalen Entleerungsvorgang des Sammelbehälters 2 durch Absaugen die Abführungsleitung 4 zu entleeren. Hierzu brauchen bei der Ausgestaltung nach Fig. 10 lediglich das Sperrventil V3 mit einem bestimmten Zeitversatz bezüglich des Sperrventils V2 geschlossen und die Absaugvorrichtung abgeschaltet zu werden. Bei der Ausgestaltung gemäß Fig. 11 bedarf es lediglich einer Abschaltung der Absaugvorrichtung mit dem Zeitversatz nach dem Schließen des Sperrventils V2. In beiden Fällen findet während des Zeitversatzes eine Entleerung der sich im Abführungsleitungsabschnitt 4a befindlichen Exkremente bei forcierter Tränsportwirkung mit der an der Einlaßöffnung 56 zugeführten Transportluft 55a statt.

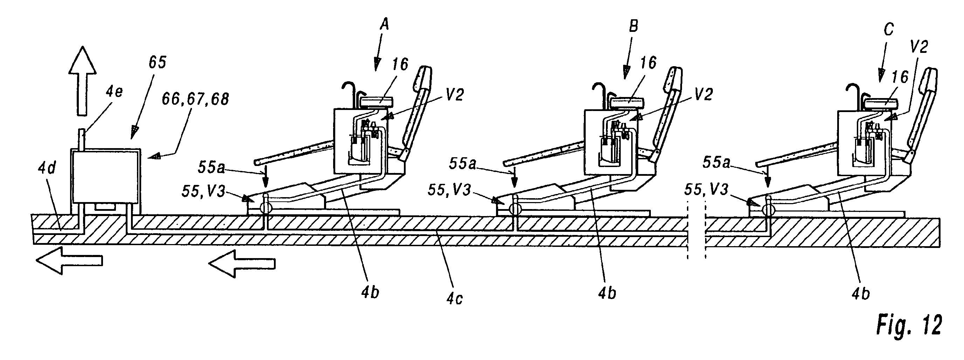

Die vorbeschriebene Zuführungsvorrichtung 55 für Transportluft eignet sich insbesondere für eine Mehrplatz-Naßab-saugung gemäß Fig. 12, bei der mehrere, dentale Behandlungsplätze A, B und C jeweils mit einem Behandlungsstuhl und mit einer gemeinsamen Absaugvorrichtung 65 verbunden sind, in der neben einer Saugmaschine 66 vorzugsweise ein Amalgamabscheider 67 und eine Separiervorrichtung 68 integriert sind. Die Behandlungsplätze A, B und C sind jeweils mit ihren Abführungsleitungsabschnitten 4b vorzugsweise in Reihe mit einem gemeinsamen Abführungsleitungsabschnitt 4c verbunden, der sich hauptsächlich horizontal bzw. mit geringem Gefälle erstreckt, z.B. im Boden oder in einer Gebäudedecke verlegt, ist und somit bezüglich der vorbeschriebenen Sedimentationsproblem besonders gefährdet ist. Die Sperrventile V3 können gemäß Fig. 10 oder 11 angeordnet sein oder in der in Fig. 12 dargestellten Stellung jeweils im Endbereich des Abführungsleitungsabschnitt 4b. Von der Absaugvorrichtung 65 erstreckt sich ein Abführungsleitungsabschnitt 4d, der an eine vorhandene Kanalisation angeschlossen sein kann. Außerdem erstreckt sich von der Absaugvorrichtung 65 ein Abführungsleitungsabschnitt 4e für separierte Luft.

Bei einer vorliegenden Behandlungsplatzanordnung kann es sich z.B. um eine Zahnarztpraxis mit einem oder mehreren, hier drei Behandlungsplätzen A, B, C handeln. Die Anordnung der Zuführungsvorrichtungen 55 für Transportluft 55a ermöglicht es, durch ein Öffnen wählbarer oder aller Zuführungsvorrichtungen 55 einen oder mehrere bestimmte oder alle Zuführungsleitungsabschnitte 4b einschließlich des Abführungsleitungsabschnitts 4c mit Hilfe der Wirkung der Transportluft 55a zu entleeren. Dabei können wenigstens einer oder alle Behandlungsplätze wahlweise in Gebrauch sein.

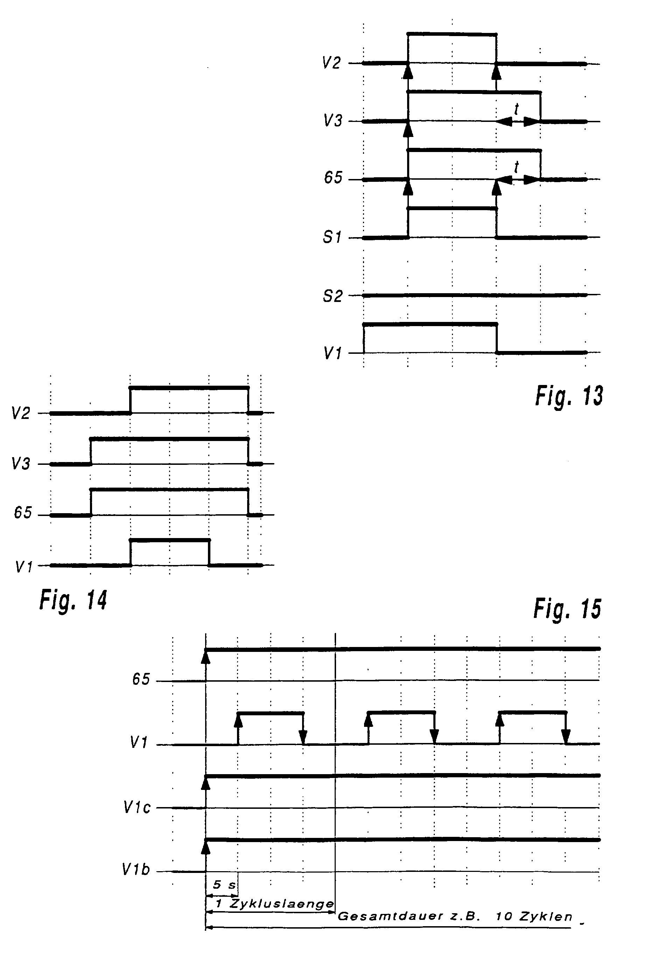

Fig. 13 zeigt schematisch ein Ablaufdiagramm für eine Entleerung des Sammelbehälters 2 im Normalbetrieb. Ein Entleerungszyklus beginnt mit einem Öffnen des Sperrventils V1 für eine Zeit von z.B. etwa 15 s, d.h. mit einer Speischalenspülung. Danach, z.B. nach etwa 5 s, werden vorzugsweise gleichzeitig mit der Niveauabfrage am Schalter S1 die Saugmaschine der Saugvorrichtung 65 eingeschaltet und die Sperrventile V2, V3 für eine Zeit von z.B. etwa 10 s geöffnet. Nach dem Schließen des Sperrventils V2 bleiben die Saugmaschine und das Sperrventil V3 jedoch für eine längere Zeit t von z.B. etwa 5 s in Funktion, wobei das Sperrventil V1 etwa gleichzeitig mit dem Sperrventil V2 oder der Saugmaschine geschlossen werden kann. Dabei werden insbesondere die Abführungsleitungsabschnitte 4b, 4c während der Zeit t aber auch der Sammelbehälter 2 und die Zuführungsleitung während der Einschaltzeit der Saugmaschine entleert und gereinigt, wobei Transportluft 55a ein- und durch gesaugt wird. Dieser Vorgang kann durch Öffnen bestimmter oder des Sperrventils V3 für einen oder mehrere oder alle Behandlungsplätze A, B, C durchgeführt werden.

In Fig. 14 ist schematisch ein automatisches Abfluß-Reinigungsprogramm dargestellt, das manuell oder automatisch, insbesondere vor längeren Stillstandszeiten, z.B. vor dem Ausschalten eines oder mehrerer Behandlungsplätze A, B, C, und/oder am täglichen Praxisende oder vor dem Wochenende einschaltbar bzw. in Funktion setzbar ist. Beim oder nach dem Funktionsbeginn werden die Saugmaschine der Absaugvorrichtung 65 eingeschaltet und das Sperrventil V3 vorzugsweise gleichzeitig für eine Zeit von z.B. etwa 20 s geöffnet. Zeitversetzt danach, z.B. nach etwa 5 s, werden die Sperrventile V1 und V2 z.B. gleichzeitig für eine Zeit von z.B. etwa 10 s geöffnet. Dabei werden insbesondere die Abführungsleitungsabschnitte 4b, 4c aber auch jeweils der Sammelbehälter 2 und die Zuführungsleitung 3 forciert entleert und gereinigt. Dieses Abfluß-Reini-gungsprogramm kann allein oder zusätzlich vorgesehen oder in ein vorhandenes Steuerprogramm integriert sein.

Nachfolgend wird ein Verfahren beschrieben, das zur Reinigung und/oder Verminderung oder Vermeidung einer Sedimentation in der die Zuführungsleitung 3, den Sammelbehälter 2 und/oder den Geruchverschluß 2.1 und die Abführungsleitung 4 umfassenden Abflußleitung dient. Bei diesem Verfahren wird die Abflußleitung wenigstens auf einem Teil ihrer Länge, vorzugsweise auf ihrer gesamten Länge, nämlich beim vorliegenden dentalmedizinischen Behandlungsplatz A, B, C von der Speischale 16 beginnend, mit Wasser gespült. Hierdurch wird der Nährboden für Mikroorganismen beeinträchtigt oder beseitigt, die in der Abflußleitung Bewüchse und Verkrustungen bilden, die zu Funktionsstörungen wie Verstopfungen im Rohr und Schlauchsystem sowie Defekte an Ventilen, an einem Separator und/oder an einem Amalgamabscheider führen können. Dabei werden auch Geruchsbelästigungen und Infektionsgefahren für das Praxispersonal vermindert oder vermieden, daß die nötigen Wartungsarbeiten auszuführen hat.

Dieses Reinigungs- und/oder Spülverfahren soll in bestimmten Zeitabständen, z.B. zwischen den Behandlungen und vor allem vor langen Stillstandszeiten wie am Praxisende oder vor dem Wochenende durchgeführt werden. Dabei ist es möglich, dieses Verfahren durch eine manuelle Steuerung und Betätigung entsprechender Betätigungsglieder durchzuführen. Vorzugsweise ist dieses Verfahren ein Reinigungs- oder Pflegeprogramm, das manuell oder automatisch eingeleitet wird und dann automatisch abläuft. Die automatische Einleitung läßt sich in vorteilhafter Weise dadurch realisieren, daß das Reinigungs- und Pflegeprogramm in das Programm eines prozessorgesteuerten Behandlungsplatzes A, B, C bzw. Behandlungsgerätes integriert wird. Bei einer automatischen Einleitung des Reinigungs- und/oder Pflegeprogramms ist die Bedienungsperson von einer Einleitung und gegebenenfalls auch Durchführung des Programms völlig freigestellt.

Figur 15 zeigt die Funktionsabläufe der Saugmaschine der Saugvorrichtung 65, der Speischalenspülung (Ventil V1), des Spraynebelsaugers Z2 und des Speichelziehers Z1 untereinander. Zur Einleitung des Reinigungs- und Pflegeprogramms wird die Saugmaschine der Saugvorrichtung 65 eingeschaltet und in Funktion belassen. Gleichzeitig können - sofern vorhanden - das Ventil V1c des Spraynebelsaugers Z2 und/oder das Ventil V1b des Speichelziehers Z1 geöffnet werden. Vorzugsweise zeitverzögert mit dem Einschalten der Saugmaschine wird das Ventil V1 der Speischalenspülung geöffnet und nach einer bestimmten Zeit wieder geschlossen, wobei die Saugmaschine 65 und gegebenenfalls auch der Spraynebelsaugers Z2 und der Speichelzieher Z1 in Funktion bleiben. Die Sprayschalenspülung V1 wird dabei in mehreren, z.B. 10 vorzugsweise gleichen Zyklen ein und wieder ausgeschaltet. Die Zykluszeit und die Pausenzeit kann z.B. etwa 10 Sekunden betragen. Dabei findet nicht nur eine Spülung der Abflußleitung sondern auch eine Reinigung statt. Die Spülung erfolgt durch den Durchfluß des Wassers, bei dem es sich - wie bereits bei den Spülmaßnahmen der vorbeschriebenen Ausführungsbeispiele - um Leitungswasser einer üblichen Hausversorgung handelt. Gleichzeitig wird Luft von der Speischale 16 her und gegebenenfalls auch durch den Speichelzieher Z1 und den Spraynebelsauger Z2 eingesaugt, die sowohl zur Förderung des Wassers als auch zur Reinigung aufgrund ihrer Strömungswirkung beiträgt.

Im Rahmen der Erfindung ist es auch möglich, die Spülung bei abgeschalteter Saugmaschine durchzuführen. Hierzu werden die Schalter S1, S2 außer Funktion gesetzt, so daß der Sammelbehälter 2 sich vollständig füllt und absinkt und das Wasser bis zum geöffneten Sperrventil V2 steigt und dann aufgrund der Schwerkraft abfließt.

Als weitere Wasserquelle kann der Becherzulauf in die Spülung eingezogen werden. Hierzu eignet sich insbesondere eine solche Leitung 16b, die sich um ihre vertikale Mittelachse drehen läßt, so daß der bogenförmige Auslauf mit seiner Öffnung über das Speischalenbecken drehbar ist und Mundspülwasser nach vorheriger Öffnung des Ventils V1a in das Speibecken 16 fließen kann. Die zuletzt genannte Maßnahme ist nicht nur deshalb vorteilhaft, weil eine größere Wassermenge zum Spülen ausgenutzt werden kann, sondern auch deshalb, weil das Mundspülwasser bei modernen Behandlungsplätzen mit einem entsprechend großen Anteil Desinfektionsmittel versehen ist, das eine zusätzliche keimreduzierende Funktion während des Spülvorgangs in der Abflußleitung mit sich bringt.

## Patentansprüche

1. Abflußsystem für fließfähige Exkremente eines medizinischen oder dentalmedizinischen Behandlungsplatzes (A, B, C), mit einer sich von einer Aufnahmeöffnung (16) erstreckenden Abflußleitung (3, 4), in der ein Sammelbehälter (2) und/oder Geruchverschluss (2.1) angeordnet ist bzw. sind, wobei eine Saugvorrichtung (65) stromab des Sammelbehälters (2) und/oder des Geruchverschlusses (2.1) mit der Abflussleitung (3, 4) verbunden ist, und wobei stromab des Sammelbehälters (2) und/oder des Geruchverschlusses (2.1) ein zu öffnendes und zu schließendes Absperrventil (V2) angeordnet ist,
**dadurch gekennzeichnet,**
**dass** der sich zum Absperrventil (V2) erstreckende Abflussleitungsabschnitt (12) aufwärts erstreckt und das Absperrventil (V2) an der höchsten Stelle der Abflussleitung (4) angeordnet ist.

2. Abflußsystem nach Anspruch 1,
**dadurch gekennzeichnet,**
**dass** sich der vom Absperrventil (V2) erstreckende Abflussleitungsabschnitt (27) horizontal oder mit Neigung oder etwa vertikal zur Saugvorrichtung (65) erstreckt.

3. Abflußsystem nach Anspruch 1 oder 2,
**dadurch gekennzeichnet,**
**dass** wenigstens eine Spülvorrichtung mit wenigstens einer Einlassöffnung für Wasser und/oder Luft für die Abflussleitung (3, 4) angeordnet ist, wobei eine elektrische Steuereinrichtung (S) zum manuellen oder automatischen Steuern des Abflußsystems vorgesehen ist und wobei die Spülvorrichtung für Wasser und/oder Luft gleichzeitig mit der Saugvorrichtung (65) für eine bestimmte Zeit einschaltbar ist.

4. Abflußsystem nach Anspruch 3,
**dadurch gekennzeichnet,**
**dass** die Einlassöffnung durch die Aufnahmeöffnung gebildet ist oder stromab der Aufnahmeöffnung angeordnet ist.

5. Abflußsystem nach Anspruch 3 oder 4,
**dadurch gekennzeichnet,**
**dass** die Einlassöffnung stromauf und/oder stromab des Sammelbehälters (2) und/oder des Geruchverschlusses (2.1) angeordnet ist.

6. Abflußsystem nach Anspruch 3,
**dadurch gekennzeichnet,**
**dass** die Einlassöffnung (56) stromab des Absperrventils (V2) angeordnet ist.

7. Abflußsystem nach einem der Ansprüche 3 bis 6,
**dadurch gekennzeichnet,**
**dass** bei einem dentalmedizinischen Behandlungsplatz (A, B, C) die Spülvorrichtung für Wasser durch eine Speischalen-Spülvorrichtung, insbesondere durch die vorhandene Speischalen-Spülvorrichtung (16a, V1), und/oder eine Mundspülwasser-Zuführungsvorrichtung (16e, V1a) gebildet ist, die durch eine Leitung mit dem Abflußsystem, insbesondere der Speischale (16) verbunden ist.

8. Abflußsystem nach Anspruch 7,
**dadurch gekennzeichnet,**
**dass** das Mundspülwasser einen Anteil Desinfektionsmittel zur Förderung oder Gewährleistung der Desinfektion enthält.

9. Abflußsystem nach einem der Ansprüche 3 bis 8,
**dadurch gekennzeichnet,**
**dass** die Spülvorrichtung für Wasser und/oder Luft in Intervallen ein- und abschaltbar ist.

10. Abflußsystem nach einem der vorherigen Ansprüche 3 bis 8,
**dadurch gekennzeichnet,**
**dass** die Einlassöffnung oder eine zusätzliche Einlassöffnung für Luft ständig geöffnet ist oder bei niedriger Saugleistung geschlossen ist und bei höherer Saugleistung geöffnet ist.

11. Abflußsystem nach einem der vorherigen Ansprüche 3 bis 10,
**dadurch gekennzeichnet,**
**dass** die Einlassöffnung für Luft durch einen Speichelsauger gebildet ist.

12. Abflußsystem nach einem der vorherigen Ansprüche 3 bis 11,
**dadurch gekennzeichnet,**
**dass** die Einlassöffnung oder eine zusätzliche Einlassöffnung für Luft im oberen Bereich des Sammelbehälters (2) und/oder im oberen Bereich des Umfangs der geneigten oder flachen Abflussleitung (4) angeordnet ist.

13. Abflußsystem nach einem der vorherigen Ansprüche 3 bis 12,
**dadurch gekennzeichnet,**
**dass** die Einlassöffnung oder eine zusätzliche Einlassöffnung durch ein Verschlusselement zu öffnen und zu schliessen ist, gegebenenfalls in Abhängigkeit vom mit der Saugvorrichtung (65) erzeugten Unterdruck.

14. Abflußsystem nach Anspruch 13,
**dadurch gekennzeichnet,**
**dass** das Verschlusselement ein Ventil (V3) ist.

15. Abflußsystem nach einem der vorherigen Ansprüche 3 bis 14,
**dadurch gekennzeichnet,**
**dass** mehrere Behandlungsplätze (A, B, C) jeweils durch einen Abflussleitungsabschnitt (3, 4) mit einem gemeinsamen Abflussleitungsabschnitt (4c) verbunden sind und jedem Abflussleitungsabschnitt (3, 4) eine Spülvorrichtung für Wasser und/oder Luft zugeordnet ist.

## Claims

1. Drainage system for flowable waste of a medical or dental-medical treatment station (A, B, C), having a drainage line (3, 4) extending from a receiving opening (16), in which drainage line there is or are arranged a collection container (2) and/or odour trap (2.1), wherein a suction device (65) is connected with the drainage line (3, 4) downstream of the collection container (2) and/or of the odour trap (2.1), and wherein a blocking valve (V2), which can be opened and closed, is arranged downstream of the collection container (2) and/or of the odour trap (2.1),
**characterized in that**,
the drainage line section (12) extending to the blocking valve (V2) extends upwardly and the blocking valve (V2) is arranged at the highest point of the drainage line (4).

2. Drainage system according to claim 1,
**characterized in that**,
the drainage line section (27) extending from the blocking valve (V2) extends horizontally or with inclination or approximately vertically to the suction device (65).

3. Drainage system according to claim 1 or 2,
**characterized in that**,
there is arranged at least one flushing device for the drainage line (3, 4), the flushing device having at least one inlet opening for water and/or air, wherein an electrical control device (S) is provided for manual or automatic control of the drainage system and wherein the flushing device for water and/or air can be switched on at the same time as the suction device (65) for a certain period.

4. Drainage system according to claim 3,
**characterized in that**,
the inlet opening is formed by means of the receiving opening or is arranged downstream of the receiving opening.

5. Drainage system according to claim 3 or 4.
**characterized in that**,
the inlet opening is arranged upstream and/or downstream of the collection container (2) and/or of the odour trap (2.1).

6. Drainage system according to claim 3,
**characterized in that**,
the inlet opening (56) is arranged downstream of the blocking valve (V2).

7. Drainage system according to any of claims 3 to 6,
**characterized in that**,
in the case of a dental-medical treatment station (A, B, C) the flushing device for water is formed by means of a spittoon basin flushing device, in particular by means of the spittoon basin flushing device (16a, V1) already present, and/or a mouth rinsing water delivery device (16a, V1a), which is connected by means of line with the drainage system, in particular the spittoon basin (16).

8. Drainage system according to claim 7,
**characterized in that**,
the mouth rinsing water contains a proportion of disinfection agent for promoting or ensuring disinfection.

9. Drainage system according to any of claims 3 to 8,
**characterized in that**,
the flushing device for water and/or air can be switched on and off at intervals.

10. Drainage system according to any of preceding claims 3 to 8,
**characterized in that**,
the inlet opening or an additional inlet opening for air is permanently open or at low suction power is closed and at higher suction power is open.

11. Drainage system according to any of preceding claims 3 to 10,
**characterized in that**,
the inlet opening for air is formed by means of a saliva suction device.

12. Drainage system according to any of preceding claims 3 to 11,
**characterized in that**,
the inlet opening or an additional inlet opening for air is arranged in the upper region of the collection container (2) and/or in the upper region of the periphery of the inclined or flat drainage line (4) .

13. Drainage system according to any of preceding claims 3 to 12,
**characterized in that**,
the inlet opening or an additional inlet opening can be opened and closed by means of the closure element, if applicable in dependence upon the partial vacuum generated with the suction device (56).

14. Drainage system according to claim 13,
**characterized in that**,
the closure element is a valve (V3).

15. Drainage system according to any of preceding claims 3 to 14,
**characterized in that**,
a plurality of treatment stations (A, B, C) are each connected by means of a drainage line section (3, 4) with a common drainage line section (4c) and there is associated with each drainage line section (3, 4) a flushing device for water and/or air.

## Revendications

1. , Système d'évacuation pour déchets liquides d'un poste de traitement médical ou dentaire (A, B, C), avec une conduite d'évacuation (3, 4) partant d'une ouverture de réception (16) dans laquelle est olacé ou sont placés un récipient collecteur (2) et/ou un siphon. (2.1), un dispositif d'aspiration (65) en aval du récipient collecteur (2) et/ou du siphon (2.1), étant relié à la conduite d'évacuation (3, 4) et une soupape d'arrêt (V2). à ouvrir et à fermer étant placée en aval du récipient collecteur (2) et/ou du siphon (2.1),
**caractérisé en ce que**
le tronçon de conduite d'évacuation (12) s'étendant vers la soupape d'arrêt (V2) s'étend vers le haut et la soupape d'arrêt (V2) étant placée au point le plus haut de la conduite d'évacuation (4).

2. Système d'évacuation selon la revendication 1,
**caractérisé en ce que**
le tronçon de conduite d'évacuation (27) partant de la soupape d'arrêt (V2) s'étend horizontalement ou avec une inclinaison ou à peu près verticalement par rapport au dispositif d'aspiration (65).

3. Système d'évacuation selon la revendication 1 ou 2,
**caractérisé en ce que**
au moins un dispositif de rinçage avec au moins une ouverture d'admission pour l'eau et/ou l'air est prévu pour la conduite d'évacuation (3, 4), un dispositif, de commande électrique (S) étant prévu pour la commandé rtianuelle ou automatique du système d'évacuation et le dispositif de rinçage pour l'eau et/ou l'air pouvant être connecté, en même temps que le dispositif d'aspiration (65) pour une durée déterminée.

4. Système d'évacuation selon la revendication 3,
**caractérisé en ce que**
l'ouverture d'admission est formée par l'ouverture de réception ou elle est placée en aval de l'ouverture de réception.

5. Système d'évacuation selon la revendication 3 ou 4.
**caractérisé en ce que**
l'ouverture d'admission est placée en amont et/ou en aval du récipient collecteur (2) et/ou du siphon (2.1).

6. Système d'évacuation selon la revendication 3,
**caractérisé en ce que**
l'ouverture d'admission (56) est placée en aval de la soupape d'arrêt (V2).

7. Système d'évacuation selon l'une quelconque des revendications 3 à 6,
**caractérisé en ce que**,
dans un poste de traitement dentaire (A, B, C), le dispositif né rinçage pour l'eau est constitué par un dispositif de rinçage à crachoir, er particulier par le dispositif de rinçage à crachoir présent (16a, V1) et/ou par un dispositif d'alimentation d'eau de rinçage buccal (16e, V1a) qui est relié au système d'évacuation, en particulier au crachoir (16), par une conduite.

8. Système d'évacuation selon la revendication 7,
**caractérisé en ce que**,
l'eau de rinçage buccal contient une portion de désinfectant pour favoriser ou garantir la désinfection,

9. Système d'évacuation selon l'une quelconque des revend cations 3 à 8,
**caractérisé en ce que**,
le dispositif de rincage pour l'eau et/ou l'air Peut être mis en service et hors service à intervalles.

10. Système d'évacuation selon l'une quelconque des revendications précédentes 3 à 8,
**caractérisé en ce que**,
l'ouverture d'admission ou une ouverture d'admission supplémentaire pour l'air est ouverte en permanence ou est fermée en cas de capacité d'aspiration plus faible et ouverte en cas de capacité d'aspiration plus élevée.

11. Système d'évacuation selon l'une quelconque des revendications précédentes 3 à 10,
**caractérisé en ce que**,
l'ouverture d'admission pour l'air est formée par un aspirateur de salive.

12. Système d'évacuation selon l'une quelconque des revendications précédentes 3 à 11,
**caractérisé en ce que**,
l'ouverture d'admission ou une ouverture d'admission supplémentaire pour l'air est placée dans la zone supérieure du récipient collecteur (2) et/ou dans la zone supérieure du périmètre de la conduite d'évacuation inclinée ou plate (4),

13. Système d'évacuation selon l'une quelconque des revendications précédentes 3 à 12,
**caractérisé en ce que**,
l'ouverture d'admission ou une ouverture d'admission supplémentaire doit être ouverte et fermée par un élément d'obturation, éventuellement en fonction de la dépression générée avec le dispositif d'aspiration (65).

14. Système d'évacuation selon la revendication 13,
**caractérisé en ce que**,
l'élément d'obturation est une soupape (V3).

15. Système d'évacuation selon l'une quelconque des revendications précédentes 3 à 14,
**caractérisé en ce que**,
plusieurs postes de traitement (A, B, C) sont respectivement reliés à un tronçon de conduite d'évacuation commun (4c) par un tronçon de conduite d'évacuation (3, 4) et **en ce qu'**un dispositif de rinçage pour l'eau et/ou l'air est associé à chaque tronçon de conduite d'évacuation (3, 4).
